# EUROPÄISCHE PATENTSCHRIFT

(11) **EP 2 963 509 B1**
(45) Veröffentlichungstag und Bekanntmachung des Hinweises auf die Patenterteilung: **25.09.2019**
(21) Anmeldenummer: 15156005.9
(22) Anmeldetag: 20.02.2015
(51) Int. Cl.: G05B 15/02, H04W 4/02, H04L 12/28

(54) **VERFAHREN ZUM BETREIBEN EINES HEIMAUTOMATISIERUNGSSYSTEMS**
METHOD FOR OPERATING A HOME AUTOMATION SYSTEM
PROCÉDÉ DE FONCTIONNEMENT D'UN SYSTÈME DOMOTIQUE

(30) Priorität: 20.02.2014 DE 102014002243
(43) Veröffentlichungstag der Anmeldung: 06.01.2016
(73) Patentinhaber: ARCA Beteiligungen GmbH, 46414 Rhede (DE)
(72) Erfinder: Kemper, Patrick, 48155 Münster (DE)
(74) Vertreter: Gottschald, Jan

(56) Entgegenhaltungen:
- EP-A2- 1 102 500
- US-A1- 2008 271 123
- US-A1- 2011 032 073
- US-A1- 2013 073 094

## Beschreibung

Die Erfindung betrifft ein Verfahren zum Betreiben eines Heimautomatisierungssystems gemäß dem Oberbegriff von Anspruch 1.

Moderne Heimautomatisierungssysteme umfassen regelmäßig eine Vielzahl von Peripherievorrichtungen, wie Motoren zum Bewegen von Rollläden, Markisen, Garten- oder Garagentoren sowie Gurtwickler, Sensoren verschiedener Art einschließlich Sonnensensoren oder Temperatursensoren, Dimmaktoren für Beleuchtungsvorrichtungen, Türkontaktsensoren, Heizkörperstellantriebe und viele weitere ähnliche Komponenten, mit denen solche Vorrichtungen eines Heimes ganz oder teilweise automatisch gesteuert werden können. Diese einzelnen Bestandteile sind regelmäßig als Module vorhanden und können weitgehend flexibel zu einem einzelnen Heimautomatisierungssystem zusammengefügt werden. Regelmäßig ist dann auch eine Zentralsteuervorrichtung vorhanden, welche mittelbar oder unmittelbar mit diesen Peripherievorrichtungen kommuniziert, um sie aktivierend für eine Bewegung anzusteuern, Sensor- oder Messdaten von diesen auszulesen, zu koordinieren und Folgen von Ansteuerung sog. Ansteuerungsfolgen zu starten oder zu beenden und um insgesamt ein Zusammenspiel der Peripherievorrichtung nach den Wünschen des jeweiligen Benutzers zu gewährleisten. Die Zentralsteuervorrichtung kann dabei mit der Peripherievorrichtung über ein drahtgebundenes oder ein drahtloses Netzwerk gemäß einem offenen oder proprietären Standard kommunizieren.

Solche Heimautomatisierungssysteme werden zunehmend auch mit weiteren persönlichen elektronischen Geräten, z. B. Smartphones oder PDAs (Personal Digital Assistants) vernetzt. Diese bieten dann die Möglichkeit, über ein solches Smartphone das Heimautomatisierungssystem anzusteuern, wobei eine Softwareanwendung oder App z. B. die Bedienfunktionalität einer herkömmlichen Fernbedienung für die Heimautomatisierung nachbilden kann. Dank der weitreichenden Kommunikationsfähigkeiten eines solchen Smartphones kann eine solche Ansteuerung dann prinzipiell von überall dort erfolgen, wo das Smartphone eine geeignete Kommunikationsverbindung, z. B. eine Mobilfunkverbindung herstellen kann. Dabei ist es also nicht mehr erforderlich, dass der jeweilige Benutzer sich in oder auch nur in der Umgebung des Heimautomatisierungssystems befindet, um dieses anzusteuern.

Solche tragbaren elektronischen Geräte wie Smartphones bieten aber neben der Möglichkeit der Kommunikation auch die der Geolokation, also der geografischen Ortsbestimmung. Unter dem Begriff der Geolokationsdienste sind verschiedene Verfahren bekannt, mit denen ein solches Smartphone und damit der Benutzer des Smartphones seine Position und insbesondere seine geografische Position bestimmen kann und darauf basierend bestimmte Funktionalitäten oder Dienste bereitgestellt werden. Eine solche geografische Positionsbestimmung kann beispielsweise über einen GPS-Empfänger in dem Smartphone oder sonstigem elektronischen Gerät erfolgen, sie kann aber auch über eine Triangulation in einem Mobilfunknetz oder anhand einer Verbindung in einem drahtlosen Lokalnetzwerk (WLAN) erfolgen. So ist es im Kontext der Geolokationsdienste bekannt, einen Benutzer über das Smartphone auf interessante Orte in seiner aktuellen Umgebung hinzuweisen.

Ebenso aus dem Stand der Technik ist es bekannt, solche Geolokationsdaten an eine Zentralsteuervorrichtung eines Heimautomatisierungssystems zu übertragen und bei der Ansteuerung der Peripherievorrichtungen zu berücksichtigen. So kann etwa eingestellt werden, dass wenn ein Benutzer sich bis auf eine bestimmte Entfernung an das dem Heimautomatisierungssystem zugeordnete Gebäude nähert, die Zentralsteuervorrichtung automatisch eine Ansteuerung der Peripherievorrichtungen vornimmt, um z. B. eine Wunschtemperatur in dem Gebäude herzustellen. Dies kann entweder das Einstellen von Heizkörpern oder aber das Öffnen oder Verschließen von Fenstern umfassen.

Allerdings kann es unter Umständen sein, dass eine solche automatische Ausführung einer Ansteuerungsfolge basierend auf Geolokationsdaten z. B. eines Benutzers nicht gewünscht oder nicht sinnvoll ist. Wenn etwa bei einer Annäherung des Benutzers eine automatische Garagentoröffnung stattfinden soll, dann ist dies nachteilig, wenn der Benutzer nur vorübergehend die Nähe des Garagentors passiert und sich anschließend wieder entfernt. Dies kann z. B. dann auftreten, wenn ein Benutzer sich dem Heimautomatisierungssystem nur deswegen nähert, weil er eigentlich auf dem Weg zu einem anderen Ziel ist.

Es kann ebenso sein, dass aufgrund eines Sturmes oder starken Regens Fenster nicht geöffnet werden sollen. Auch in einem solchen Fall wird der Benutzer nicht wünschen, dass auf seine Annäherung hin gemäß seiner Geolokationsdaten automatisch eine Fensteröffnung stattfindet.

Bekannte Heimautomatisierungssysteme, die basierend auf Personengeolokationsdaten betrieben werden, sind in der EP 1 102 500 A2, der US 2008/0271123 A1 und der US 2011/0032073 A1 gezeigt. In der US 2013/0073094 A1 ist eine Heizungs-, Lüftungs- und Klimatisierungs-Kontrollsystem beschrieben.

Vor diesem Hintergrund besteht die Aufgabe der Erfindung darin, ein Verfahren zum Betreiben eines Heimautomatisierungssystems bereitzustellen, welches prinzipiell in der Lage ist, basierend auf Geolokationsdaten Ansteuerungsfolgen der Peripherievorrichtungen durchzuführen, welches aber gleichzeitig flexibler auf besondere Umstände oder Wünsche reagieren kann.

Diese Aufgabe wird bezogen auf ein Verfahren zum Betreiben eines Heimautomatisierungssystems durch die Merkmale von Anspruch 1 gelöst.

Wesentlich für die Erfindung ist die Erkenntnis, dass die Bestimmung und Ausführung einer Ansteuerungsfolge nicht rein auf den Geolokationsdaten basiert, sondern zusätzlich noch ein empfangenes Externsignal von der Zentralsteuervorrichtung bei der Bestimmung und Ausführung der Ansteuerungsfolge berücksichtigt wird. Unter einem Externsignal ist ein beliebiges Signal zu verstehen, welches nicht rein innerhalb des Heimautomatisierungssystems selbst erzeugt wurde - was etwa für einen durch die Zentralsteuervorrichtung gestarteten Zeitgeber der Fall wäre - sondern entweder aus der Umgebung von einem Bediener oder von einem Gerät stammt, welches nicht zum Heimautomatisierungssystem im engeren Sinne gehört. Das Externsignal ist auch von einer Direktbedieneingabe zu unterscheiden, worunter etwa die Betätigung einer Bedientaste zu verstehen wäre, welche stur für die Dauer der Betätigung einen Motor der Peripherievorrichtungen in eine bestimmte Richtung bewegen lässt.

Ferner handelt es sich bei dem Externsignal um ein Signal, welches bei der Zentralsteuervorrichtung den eingeschalteten Betriebszustand beibehalten lässt. Mit anderen Worten fällt ein Ausschalten der Zentralsteuervorrichtung und insbesondere eine Notausschaltung nicht unter den Begriff des Externsignals im vorliegenden Sinne.

Nachfolgend wird in den bevorzugten Ausführungsbeispielen eine Reihe von Beispielen für ein solches Externsignal dargestellt.

Die bevorzugte Ausgestaltung des Anspruchs 3 sieht ein Externsignal vor, welches ebenfalls auf Geolokationsdaten basiert, welche aber von den ursprünglichen maßgeblichen Geolokationsdaten verschieden sind.

Der Unteranspruch 6 sieht Bewegungsdaten eines Benutzers als Grundlage für ein solches Externsignal vor.

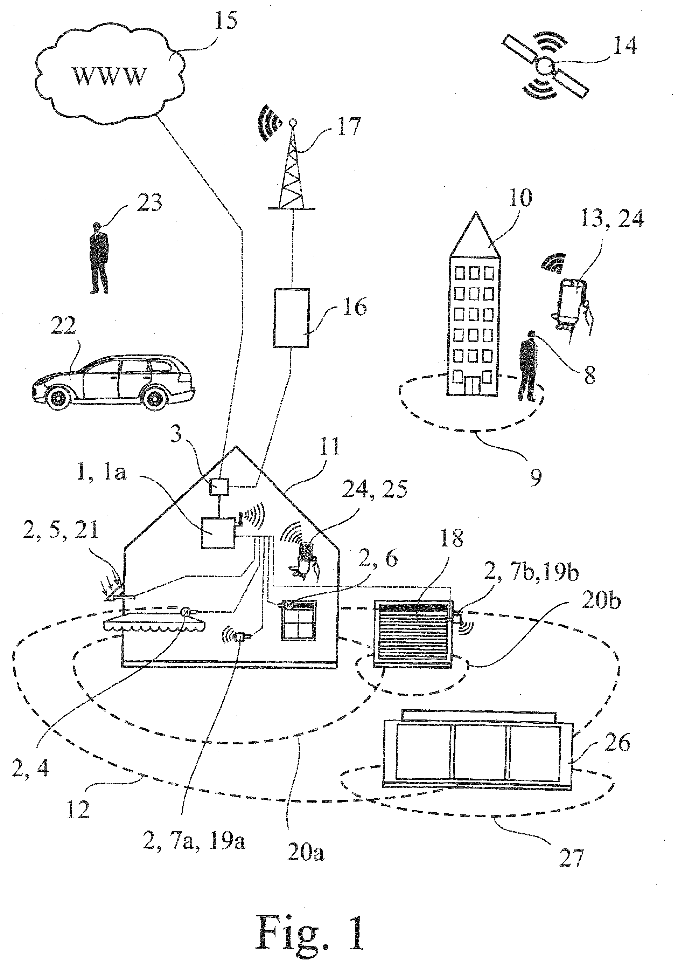

Die bevorzugten Ausgestaltungen der Unteransprüche 7 bis 14 betreffen die Berücksichtigung von Signalen, die durch eine Bedienvorrichtung, bei welcher es sich insbesondere um ein Smartphone handeln kann, erzeugt werden. Dabei kann es sich einerseits um Bedieneingaben handeln, welche durch die Unteransprüche 10 bis 14 genauer beschrieben werden oder aber um durch die Bedienvorrichtung unabhängig von einer Bedieneingabe ermittelte Daten, die schließlich für die Unteransprüche 8 und 9 gegenständlich sind. Weitere Einzelheiten, Merkmale, Ziele und Vorteile der vorliegenden Erfindung werden nachfolgend anband der Zeichnung eines bevorzugten Ausführungsbeispiels erläutert. In der Zeichnung zeigt
- Fig. 1: eine schematische Ansicht eines Heimautomatisierungssystems zum Ausführen des vorschlagsgemäßen Verfahrens.

Das vorschlagsgemäße Verfahren dient zum Betreiben eines Heimautomatisierungssystems, wie es gemäß dem Ausführungsbeispiel der Fig. 1 dargestellt ist. Dieses Heimautomatisierungssystem weist eine Zentralsteuervorrichtung 1 und Peripherievorrichtung 2 auf. Vorliegend handelt es sich bei der Zentralsteuervorrichtung um eine elektronische Modulbox 1a. Diese weist lediglich einige Tasten und keinen Bildschirm als Bedienoberfläche auf. Denkbar ist aber auch, dass die Zentralvorrichtung 1 auch eine umfangreichere Bedienoberfläche aufweist. Die Zentralsteuervorrichtung 1 ist mit einem Router 3 verbunden und entweder selbst oder über diesen Router 3 zur drahtlosen oder drahtgebundenen Kommunikation in der Lage. Hier kommt WLAN oder ein sonstiges drahtloses Netzwerk nach einem offenen oder proprietären Protokoll, das Telefonnetz oder auch das Internet infrage. Prinzipiell kann die Zentralsteuervorrichtung 1 auch mehrere Komponenten in verschiedenen Gehäusen umfassen, was auch für jede einzelne Peripherievorrichtung 2 gelten kann.

Im vorliegenden Beispiel umfassen die Peripherievorrichtungen 2 einen Markisenmotor 4, einen Wettersensor 5, welcher Wettersensor 5 eine Sonnensensorfunktion und/oder eine Regensensorfunktion bieten kann, einen Rollladenmotor 6, einen nicht dargestellten Garagentormotor sowie Bewegungssensoren 7a, b, welche allesamt zur drahtlosen Kommunikation mit der Zentralsteuervorrichtung 1 über ein drahtloses Netzwerk eingerichtet sind. Vorschlagsgemäß sind entsprechend die Peripherievorrichtung 2 mit der Zentralsteuervorrichtung 1 nachrichtentechnisch verbindbar und von der Zentralsteuervorrichtung 1 ansteuerbar. Vorzugsweise kann die Kommunikation zwischen der jeweiligen Peripherievorrichtung 2 unter der Zentralsteuervorrichtung 1 in beiden Richtungen erfolgen.

Ebenso vorschlagsgemäß ist die Zentralsteuervorrichtung dazu eingerichtet, in einem eingeschalteten Betriebszustand die Peripherievorrichtungen 2 gemäß einer ausführbaren Ansteuerungsfolge anzusteuern und ggf. gemäß Direktbedieneingaben anzusteuern. Die Zentralsteuervorrichtung 1 kann demnach mehrere Betriebszustände einnehmen, wobei hierzu prinzipiell ein ausgeschalteter und ein eingeschalteter Betriebszustand zu zählen sind. Daneben können auch ein Stand-by-Modus, ein Alarm-Modus oder weitere Betriebszustände vorgesehen sein. Der eingeschaltete Betriebszustand entspricht dabei demjenigen Betriebszustand, in welchem die regelgemäße oder normale Funktionalität der Zentralsteuervorrichtung 1 gegeben ist.

Die Zentralsteuervorrichtung 1 kann wahlweise in der Lage sein, Direktbedieneingaben zu empfangen und zu verarbeiten. Unter einer solchen Direktbedieneingabe ist eine Eingabe zu verstehen, welche direkt und unmittelbar mit einer bestimmten Ansteuerung einer Peripherievorrichtung 2 gekoppelt ist. So können etwa den Motoren wie dem Markisenmotor 4 und dem Rollladenmotor 6 spezielle Tasten zugeordnet sein, welche unmittelbar und für die Dauer der Betätigung der Taste eine Bewegung des Motors in eine zugeordnete Richtung auslösen. Diese Direktbedieneingabe kann unmittelbar an der Zentralsteuervorrichtung 1 erfolgen oder mittelbar an diese kommuniziert werden.

In diesem eingeschalteten Betriebszustand kann die Zentralsteuervorrichtung 1 also die Peripherievorrichtung 2 gemäß einer ausführbaren Ansteuerungsfolge ansteuern. Es handelt sich also um eine Abfolge von einzelnen Ansteuerungsvorgängen, welche sich auf ein oder mehrere der Peripherievorrichtungen 2 beziehen. Diese werden auch als Szenen bezeichnet und sollen z. B. in bestimmten Situationen ausgeführt werden und mehrere Einzelansteuerungsschritte sinnvoll zusammenfassen. Eine solche Ansteuerungsfolge kann prinzipiell auf ein Sensorsignal hin oder auch auf eine Bedieneingabe hin ausgelöst werden. Ein Beispiel wäre etwa ein globales Signal "Rollläden hoch", wodurch alle Rollladenmotoren des Heimautomatisierungssystems und hier speziell der Rollladenmotor 6 so angesteuert werden, dass die Rollläden hochgefahren werden. Von derartigen Ansteuerungsfolgen kann eine Mehrzahl hinterlegt sein, vorzugsweise in der Zentralsteuervorrichtung 1 oder in einer der Zentralsteuervorrichtung 1 zugeordneten Speicheranordnung.

Im vorschlagsgemäßen Verfahren empfängt die Zentralsteuervorrichtung 1 nun Personengeolokationsdaten und bestimmt darauf basierend eine Ausführung der Ansteuerungsfolge. Bei diesen Personengeolokalisationsdaten kann es sich beispielsweise um die Geolokationsdaten eines in der Fig. 1 dargestellten Benutzer 8 handeln, welcher insbesondere dem Heimautomatisierungssystem zugeordnet sein kann. Gemäß der Darstellung der Fig. 1 befindet sich dieser Benutzer 8 in einem Büronahbereich 9 eines Bürogebäudes 10. Die Geolokationsdaten des Benutzers 8 können hier beispielsweise durch ein nicht näher dargestelltes Drahtloslokalnetzwerk des Bürogebäudes 10 bestimmt werden, insbesondere wenn der Benutzer 8 z. B. einen tragbaren Computer mit einer entsprechenden Funkschnittstelle bei sich führt.

Wenn sich nun der Benutzer 8 in Richtung eines Heimgebäudes 11, welches hier dem Heimautomatisierungssystem zugeordnet ist und in welchem sich die Zentralsteuervorrichtung 1 befindet, bewegt und einen Umgebungsbereich 12 um das Heimgebäude 11 betritt, so kann dies über ein Smartphone 13, welches GPSfähig ist und vorzugsweise dem Benutzer 8 zugeordnet ist, sowie mittels eines zugeordneten GPS-Systems 14 erfasst werden. Dann können weiter einer Position des Benutzers 8 entsprechende Geolokationsdaten - welche hier die Personengeolokationsdaten bilden - erzeugt und entweder über das Internet 15 oder ein Telefonnetzwerk 16 an die Zentralsteuervorrichtung 1 übertragen werden. Die Erfassung der Personengeolokationsdaten bzw. deren Übertragung an die Zentralsteuervorrichtung 1 kann auch ganz oder teilweise über ein Mobilfunknetzwerk 17 erfolgen. Daraufhin kann die Zentralsteuervorrichtung 1 eine Ansteuerungsfolge zur Ausführung bestimmen im Zuge derer der Garagentormotor der Peripherievorrichtungen 2 zur Öffnung eines Garagentors 18 angesteuert wird.

Das vorschlagsgemäße Verfahren ist nun dadurch gekennzeichnet, dass die Zentralsteuervorrichtung 1 unter Beibehaltung des eingeschalteten Betriebszustandes die Ausführung der Ansteuerungsfolge basierend auf einem, empfangenen Externsignal anpasst. Vorschlagsgemäß findet die Ausfuhrung dieser Ansteuerungsfolge nun also nicht unverändert statt, sondern es erfolgt eine Modifikation basierend auf dem Externsignal, welches von der Zentralsteuervorrichtung 1 empfangen wurde.

Falls und insoweit die Zentralsteuervorrichtung 1 zum Empfang von Direktbedieneingaben eingerichtet ist, ist dieses Externsignal - wie bereits beschrieben - verschieden zu einer solchen Direktbedieneingabe. Bei dem Externsignal handelt es sich also um keine Direktbedieneingabe. Allerdings ist dieses Extemsignal auch nicht ein solches, welches zu einem Verlassen des eingeschalteten Betriebszustands der Zentralsteuervorrichtung 1 führt. Insbesondere handelt es sich also nicht um ein Ausschaltsignal oder ein Notausschaltsignal der Zentralsteuervorrichtung 1, wobei durch das fundamentale Ausschalten der Zentralsteuervorrichtung 1 auf diesem Wege die Ausführung der Ansteuerungsfolge abgebrochen und damit angepasst würde.

Nachfolgend werden bevorzugte Ausgestaltungen sowohl dieses Externsignals als auch der darauf basierenden Anpassung der Ansteuerungsfolge beschrieben.

Das vorschlagsgemäße Verfahren ist dadurch gekennzeichnet, dass das Externsignal von einem Nahbereichssensor 19a, b erzeugte Nahbereichsdaten umfasst, wobei dieser Nahbereichssensor 19a, b ein Personensensor ist, wie etwa die in der Fig. 1 dargestellten Bewegungssensoren 7a, b. Dieser Nahbereichssensor 19a, b ist vorzugsweise an oder in dem dem Heimautomatisierungssystem zugeordneten Heimgebäude 11 angeordnet. Die Nahbereichssensoren 19a, b erfassen jeweils ein Nahbereichsfeld 20a, b. Es kann z. B. sein, dass eine automatische Öffnung des Garagentors 18 aufgrund der Ansteuerungsfolge modifiziert oder unterlassen werden soll, und zwar speziell aus Sicherheitsgründen, wenn der Nahbereichssensor 19b die Anwesenheit einer Person in seinem Nahbereichsfeld 20b wahrnimmt, welches hier die Umgebung des Garagentors 18 abdeckt.

Es ist vorgesehen, dass das Externsignal von einem Umweltsensor 21 erzeugte Umweltdaten umfasst. Bei einem solchen Umweltsensor handelt es sich speziell um den obigen Wettersensor 5, welcher hier als kombinierter Sonnen- und Regensensor sowie als Sensor zur Ermittlung einer Luftfeuchtigkeit und des Luftdrucks dargestellt wird. Es ist vorzugsweise vorgesehen, dass dieser Umweltsensor 21 an dem dem Heimautomatisierungssystem zugeordneten Heimgebäude 11 oder an einem Fahrzeug 22 angeordnet ist. Basierend auf den Geolokationsdaten des Fahrzeugs 22 kann z. B. festgestellt werden, dass sich das Fahrzeug 22 in einer hinreichenden Nähe zum Heimautomatisierungssystem befindet, sodass ein von einem Regensensor des Fahrzeugs 22 wahrgenommener Niederschlag auch für das Heimgebäude 11 des Heimautomatisierungssystems anzunehmen ist. Aufgrund solcher Umweltdaten, welche über Niederschlag, Windverhältnisse o. dgl. Aufschluss geben können, kann also beispielsweise eine Rollladenöffnung durch den Rollladenmotor 6 unterdrückt werden, auch wenn gemäß der auszuführenden Ansteuerungsfolge bei einer Annäherung des Benutzers 8 in den Umgebungsbereich 12 des Heimgebäudes 11 dies automatisch erfolgen sollte. Auf diese Weise können Schäden im Heimgebäude 11 vermieden werden.

Ebenso ist es bevorzugt, dass das Externsignal Zusatzgeolokationsdaten umfasst, welche von den Personengeolokationsdaten zumindest zeitweise abweichen. Bei den Zusatzgeolokationsdaten handelt es sich also um Geolokationsdaten, welche nicht an dieselbe Person - hier also der zugeordnete Benutzer 8 - oder dieselbe Vorrichtung gebunden sind wie die Personengeolokationsdaten. Die Position entsprechende der Zusatzgeolokationsdaten ist also prinzipiell unabhängig von derjenigen der Personengeolokationsdaten.

Bevorzugt ist ferner, dass die Zusatzgeolokationsdaten Fahrzeuggeolokationsdaten und oder personenbezogene Geolokationsdaten umfassen. Es kann sich also um Geolokationsdaten des Fahrzeugs 22 handeln, welche nur solange und insoweit mit den Geolokationsdaten des Benutzers 8 übereinstimmen, wie der Benutzer 8 sich in dem Fahrzeug 22 befindet. Es kann sich auch um Geolokationsdaten z. B. einer weiteren, von dem Benutzer 8 verschiedenen Person 23 handeln. Mit dieser Ausgestaltung kann z. B. der Situation Rechnung getragen werden, dass der Benutzer 8 sich aus dem Heimgebäude 11 und auch aus dem Umgebungsbereich 12 entfernt, die weitere Person 23 aber in diesem Bereich verbleibt. In so einem Fall sollte eine Ansteuerungsfolge, welche z. B. die Temperatur in dem Heimgebäude 11 herunterfährt, nicht ausgeführt werden, um das Wohlbefinden der weiteren Person 23 nicht zu beeinträchtigen.

Grundsätzlich kann es sich bei den Personengeolokationsdaten um Geolokationsdaten einer beliebigen Person handeln. Bevorzugt ist es allerdings, dass - dem vorliegenden Ausführungsbeispiel gemäß - die Personengeolokationsdaten Geolokationsdaten eines dem Heimautomatisierungssystem zugeordneten Benutzers 8 umfassen. Die Zuordnung des Benutzers 8 kann sich daraus ergeben, dass es sich z. B. um den Eigentümer des Heimautomatisierungssystems handeln kann oder um eine Person mit einer besonderen oder vorrangigen Berechtigung zur Steuerung des Heimautomatisierungssystems und speziell der Zentralsteuervorrichtung. Grundsätzlich können auch mehrere Benutzer 8 dem Heimautomatisierungssystem in diesem Sinne zugeordnet sein.

Witerhin ist vorgesehen, dass das Extemsignal Nahbereichsortsdaten einer Person, bei der es sich vorzugsweise um den zugeordneten Benutzer 8 handelt, umfasst. Diese Nahbereichsortsdaten geben eine Position dieser Person mit einer Genauigkeit an, welche höher ist, als diejenige der Personengeolokationsdaten. Diese Position der Person kann beispielsweise auch in Bezug zum Heimgebäude 11 angegeben werden. So kann vorgesehen sein, dass wenn der Benutzer 8 sich dem Heimgebäude 11 nähert und den Umgebungsbereich 12 betritt, bereits eine Ansteuerung der Peripherievorrichtung 2 durch eine Ansteuerungsfolge erfolgt, welche u.a eine voreingestellte Innentemperatur im Heimgebäude 11 sicherstellen soll. Der letzte Schritt der Ansteuerungsfolge, welcher z. B. eine Öffnung des Rollladens durch eine Ansteuerung des Rollladenmotors 6 vorsieht, wird dann aber erst ausgeführt bzw. nur dann ausgeführt, wenn die Person das Nahbereichsfeld 20a des Nahbereichssensors 19a betritt. Das Öffnen des Rollladens kann damit kurzfristig geschehen und soll etwa erst unmittelbar vor dem Betreten des Gebäudes 11 erfolgen. Hier kann es also unter Umständen sein, dass die z. B. durch das GPS-System 14 ermittelten Personengeolokationsdaten nicht in ihrer Genauigkeit ausreichen, um die Annäherung des Benutzers 8 an das Heimgebäude 11 in das Nahbereichsfeld 20a in diesem Sinne festzustellen. Daher wird für diesen letzten Schritt auf die Nahbereichsortsdaten abgestellt, die hier beispielsweise von dem Nahbereichssensor 19a, bei dem es sich um den Bewegungssensor 7 handelt, bereitgestellt werden.

Eine weitere bevorzugte Ausgestaltung sieht vor, dass das Extemsignal Bewegungsdaten einer Person umfasst, wobei es sich bei dieser Person insbesondere um den zugeordneten Benutzer 8 handeln kann. Diese Bewegungsdaten können momentane Bewegungsdaten sein, was bedeutet, dass sie im Wesentlichen einen aktuellen Bewegungszustand der Person widerspiegeln. Die Bewegungsdaten können insbesondere eine Bewegungsgeschwindigkeit und/oder eine Bewegungsrichtung der Person bzw. des zugeordneten Benutzers 8 umfassen.

So kann es beispielsweise sein, dass eine Ansteuerungsfolge, welche grundsätzlich bei dem Betreten des Umgebungsbereichs 12 durch den Benutzer 8 ausgeführt werden soll, unterdrückt wird, wenn sich gemäß dem Externsignal der Benutzer 8 mit einer aktuell hohen Bewegungsgeschwindigkeit in dem Umgebungsbereich 12 befindet. Das könnte z. B. darauf hindeuten, dass der Benutzer 8 in einem Fahrzeug 22 den Umgebungsbereich nur kurzzeitig durchquert. Die Bewegungsdaten können entweder basierend auf den Geolokationsdaten extrapoliert werden, wenn etwa eine rasche Veränderung der Geolokationsdaten festgestellt wird, sie können aber auch auf anderen Sensoren basieren, so etwa auf einem Beschleunigungssensor z. B. in einem Smartphone 13 des Benutzers 8. Die Bewegungsdaten können auch direkt aus einem Geschwindigkeitswert des Fahrzeugs 22 ermittelt werden, wenn beispielsweise auch das Fahrzeug 22 in nachrichtentechnischer Verbindung zu der Zentralsteuervorrichtung 1 steht. Aus einer zeitweisen Identität der Geolokationsdaten des Benutzers 8 - hier der Personengeolokationsdaten - sowie des Fahrzeugs 22 ließe sich dann schließen, dass die Bewegungsdaten des Fahrzeugs 22 auch Bewegungsdaten des Benutzers 8 sind, da sich der Benutzer 8 in dem Fahrzeug 22 befindet.

Alternativ oder zusätzlich kann vorgesehen sein, dass das Externsignal ein von einer Bedienvorrichtung 24 auf eine Bedienhandlung erzeugtes Bediensignal umfasst. Bei dieser Bedienvorrichtung 24 kann es sich beispielsweise um das Smartphone 13 handeln.

Unter einer Bedienung im vorliegenden Sinne ist jedwede Benutzereingabe, sei es durch Berührung, durch Sprache oder durch ein Eingabegerät an der Bedienvorrichtung 24 zu verstehen. Die Bedienvorrichtung 24 kann auch gebäudegebunden sein, wobei es sich beispielsweise um eine Fernbedienung 25 handeln kann, die zwar drahtlos mit der Zentralsteuervorrichtung 1 kommuniziert, aber nur eine geringe Kommunikationsreichweite aufweist und daher im Gegensatz zum Smartphone 13 nur in einer näheren Umgebung der Zentralsteuervorrichtung 1 und damit des Heimgebäudes 11 verwendet werden kann.

Bevorzugt ist die Bedienvorrichtung 24 mobilfunkfähig, was etwa für das Smartphone 13 gegeben ist. Weiter ist bevorzugt, dass die Bedienvorrichtung 24 auf eine Position der Bedienvorrichtung 24 bezogene Geolokationsdaten erzeugen kann. Dies ist etwa durch eine GPS-Funktionalität des Smartphones 13 gegeben. Bevorzugt ist auch, dass es die Bedienvorrichtung 24 ist, welche die Personengeolokationsdaten erzeugt und - mittelbar oder unmittelbar - an die Zentralsteuervorrichtung 1 überträgt. Hier bietet es sich insbesondere an, dass die Bedienvorrichtung 24 dem zugeordneten Benutzer 8 ihrerseits zugeordnet ist. Dies kann etwa dadurch verwirklicht werden, dass der Benutzer 8 einen Zugangscode, wie z. B. einen PIN-Code eingeben muss, um sich bei der Bedienvorrichtung 24 anzumelden um die auf ihn bezogenen Funktionalitäten, wie z. B. E-Mail empfangen o. dgl. und speziell die Erzeugung und Übertragung der Personengeolokationsdaten freizuschalten.

Es kann auch sein, dass das Externsignal von einem Sensor, bei dem es sich vorzugsweise um einen Gerätenahbereichssensor handelt, der Bedienvorrichtung 24 erzeugte Sensordaten umfasst. In so einem Fall würde also etwa das Smartphone 13 nicht nur die Personenlokalisationsdaten erzeugen und übermitteln, sondern z. B. zusätzlich noch erfassen, dass der Benutzer 8 sich sehr schnell bewegt. Daraufhin könnte dann davon ausgegangen werden, dass beispielsweise der von dem Benutzer 8 betretene Umgebungsbereich 12 nur vorübergehend betreten wird und deswegen die ansonsten vorgesehene Ansteuerungsfolge nicht ausgeführt werden soll.

Der Benutzer 8 könnte wünschen, dass eine bestimmte Ansteuerungsfolge zwar prinzipiell ausgeführt werden soll, aber erst mit einer bestimmten zeitlichen Verzögerung. Es könnte z. B. sein, dass der Benutzer in einem Garten um das Heimgebäude 11 noch einige Arbeiten erledigen möchte, bevor er das Heimgebäude 11 schließlich betritt. Zwischen dem Erreichen des Umgebungsbereichs 12 und dem Betreten des Gebäudes 11 würde also mehr Zeit verstreichen als normalerweise. Zu diesem Zweck ist es bevorzugt, dass die Bedienvorrichtung 24 auf die Eingabe einer Aussetzanweisung ein Aussetzsignal als Bediensignal erzeugt, worauf die Zentralsteuervorrichtung 1 die Ausführung der Ansteuerungsfolge für eine vorgegebene und/oder benutzereingebbare Aussetzdauer aussetzt. Sofern also eine Aussetzanweisung an der Bedienvorrichtung 24 eingegeben wird, woraufhin die Ansteuerungsfolge ausgesetzt und damit in ihrer Ausführung verzögert wird, ist die entsprechende Zeitdauer der Aussetzung entweder fest vorgegeben oder aber durch insbesondere den Benutzer 8 eingebbar, und zwar insbesondere ebenfalls an der Bedienvorrichtung 24.

Eine weitere Möglichkeit der Anpassung der Ansteuerungsfolge könnte darin bestehen, bestimmte einzelne Ansteuerungen der Peripherievorrichtung 2 zu unterlassen. So könnte z. B. an einem bestimmten Tag der Benutzer 8 wünschen, dass abweichend von der regelmäßigen Ansteuerungsfolge die Markise nicht ausgefahren werden soll, was den Markisenmotor 4 betreffen würde. Daher ist vorzugsweise vorgesehen, dass die Bedienvorrichtung 24 auf die Eingabe einer Auswahlanweisung mit einer Auswahl einzelner Ansteuerungsschritte der Ansteuerungsfolge ein Auswahlsignal als Bediensignal erzeugt, worauf die Zentralsteuervorrichtung 1 die Ansteuerungsfolge gemäß der Auswahl auswählt. Dies könnte z. B. bedeuten, nur diejenigen Ansteuerungsschritte der Ansteuerungsfolge auszuführen, welche ausgewählt wurden. Umgekehrt kann die Auswahl auch negativ in dem Sinne sein, dass die nicht auszuführenden Ansteuerungsschritte der Ansteuerungsfolge ausgewählt werden.

Eine weitere Variante sieht vor, dass die Bedienvorrichtung 24 auf die Eingabe einer Ortsanweisung mit einer Ortsdefinition ein Ortssignal als Bediensignal erzeugt, worauf die Zentralsteuervorrichtung 1 die Ausführung der Ansteuerungsfolge basierend auf einer Position gemäß der Personengeolokationsdaten zur Ortsdefinition aussetzt. Das kann bedeuten, dass die Ausführung der Ansteuerungsfolge ausgesetzt wird, solange die Position gemäß der Personengeolokationsdaten einer Person dieser Ortsdefinition ist. Ein Beispiel hierfür ist in der Fig. 1 dargestellt, in der ein Geschäftsgebäude 26 mit einem Geschäftsumgebungsbereich 27 wiedergegeben ist. Dieser Geschäftsumgebungsbereich 27 überlappt sich teilweise mit dem Umgebungsbereich 12.

Bei dem Geschäftsgebäude 26 kann es sich beispielsweise um ein Einkaufszentrum handeln. Der Benutzer 8 kann nun vorsehen, dass die Ausführung der Ansteuerungsfolge solange unterdrückt werden soll, wie er sich in dem Geschäftsumgebungsbereich 27 befindet, was z. B. der Dauer seines Einkaufs in dem Einkaufszentrum entsprechen kann. Somit führt dann das Betreten des Geschäftsumgebungsbereichs 27 auch innerhalb des Umgebungsbereichs 12 nicht zu einer unmittelbaren Ausführung der Ansteuerungsfolge. Vielmehr wird, weil dann die Personengeolokationsdaten eine Position innerhalb des Geschäftsumgebungsbereichs 27 definieren, die Ausführung der Ansteuerungsfolge bis zum Verlassen des Geschäftsumgebungsbereichs 27 ausgesetzt.

Es kann auch eine Möglichkeit vorgesehen sein, dass der Benutzer 8 dynamisch auf eine auszuführende Ansteuerungsfolge reagieren kann, und zwar entweder unmittelbar vor oder zu Beginn der Ausführung der Ansteuerungsfolge. Dies kann dadurch verwirklicht werden, dass dem Benutzer 8 eine entsprechende Benachrichtigung kommuniziert wird. Folglich ist es bevorzugt vorgesehen, dass die Zentralsteuervorrichtung 1 eine auf die bestimmte Ansteuerungsfolge bezogene Benachrichtigung an die Bedienvorrichtung 24 überträgt und dass die Bedienvorrichtung 24 die Benachrichtigung über eine Bedienausgabe signalisiert. Eine solche Bedienausgabe kann auf einem Display der Bedienvorrichtung oder über eine Tonausgabe erfolgen. Hier ist weiter vorgesehen, dass die Bedienvorrichtung 24 das Bediensignal basierend auf einer Eingabe auf die Benachrichtigung - also auf eine Eingabe als Reaktion auf die Benachrichtigung - erzeugt. Dieses Bediensignal kann dann, wie bereits oben beschrieben, als Grundlage für eine der vielfältigen Anpassungen der Ausführung der Ansteuerungsfolge dienen.

Insbesondere kommt in Betracht, dass die obige Eingabe eine Abbruchanweisung ist, dass das Bediensignal ein Abbruchsignal ist und dass die Zentralsteuervorrichtung 1 auf das Abbruchsignal eine Ausführung der Ansteuerungsfolge abbricht und/oder unterdrückt.

## Patentansprüche

1. Verfahren zum Betreiben eines Heimautomatisierungssystems mit einer Zentralsteuervorrichtung (1) und Peripherievorrichtungen (2), wobei die Peripherievorrichtungen (2) einen Rollladenmotor umfassen, wobei die Peripherievorrichtungen (2) mit der Zentralsteuervorrichtung (1) nachrichtentechnisch verbindbar und von der Zentralsteuervorrichtung (1) ansteuerbar sind, wobei die Zentralsteuervorrichtung (1) dazu eingerichtet ist, in einem eingeschalteten Betriebszustand die Peripherievorrichtungen (2) gemäß einer ausführbaren Ansteuerungsfolge anzusteuern und ggf. gemäß Direktbedieneingaben anzusteuern und wobei die Zentralsteuervorrichtung (1) Personengeolokationsdaten empfängt und darauf basierend eine Ausführung der Ansteuerungsfolge bestimmt,
wobei die Zentralsteuervorrichtung (1) unter Beibehaltung des eingeschalteten Betriebszustands die Ausführung der Ansteuerungsfolge basierend auf einem empfangenen Externsignal, welches ggf. verschieden zu den Direktbedieneingaben ist, anpasst, wobei das Externsignal von einem Nahbereichssensor (19a, b) erzeugte Nahbereichsdaten umfasst, wobei der Nahbereichssensor (19a, b) ein Personensensor ist, und wobei das Externsignal von einem als Wettersensor ausgestalteten Umweltsensor (21) erzeugte Umweltdaten umfasst.

2. Verfahren nach Anspruch 1, **dadurch gekennzeichnet, dass** der Umweltsensor an einem dem Heimautomatisierungssystem zugeordneten Heimgebäude (11) oder an einem Fahrzeug (22) angeordnet ist.

3. Verfahren nach Anspruch 1 oder 2, **dadurch gekennzeichnet, dass** das Externsignal Zusatzgeolokationsdaten umfasst, welche von den Personengeolokationsdaten zumindest zeitweise abweichen, vorzugsweise, dass die Zusatzgeolokationsdaten Fahrzeuggeolokationsdaten und/oder personenbezogene Geolokationsdaten umfassen.

4. Verfahren nach einem der Ansprüche 1 bis 3, **dadurch gekennzeichnet, dass** die Personengeolokationsdaten Geolokationsdaten eines dem Heimautomatisierungssystem zugeordneten Benutzers (8) umfassen.

5. Verfahren nach einem der Ansprüche 1 bis 4, **dadurch gekennzeichnet, dass** das Externsignal Nahbereichsortsdaten einer Person, vorzugsweise des zugeordneten Benutzers (8), umfasst, welche eine Position der Person, vorzugsweise in Bezug zum Heimgebäude (11), mit einer Genauigkeit angeben, welche höher ist als diejenige der Personengeolokationsdaten.

6. Verfahren nach einem der Ansprüche 1 bis 5, **dadurch gekennzeichnet, dass** das Externsignal, vorzugsweise momentane, Bewegungsdaten, insbesondere eine Bewegungsgeschwindigkeit und/oder eine Bewegungsrichtung, einer Person, insbesondere des zugeordneten Benutzers, umfasst.

7. Verfahren nach einem der Ansprüche 1 bis 6, **dadurch gekennzeichnet, dass** das Externsignal ein von einer Bedienvorrichtung (24) auf eine Bedienhandlung erzeugtes Bediensignal umfasst, vorzugsweise, dass die Bedienvorrichtung (24) gebäudegebunden ist.

8. Verfahren nach Anspruch 7, **dadurch gekennzeichnet, dass** die Bedienvorrichtung (24) mobilfunkfähig ist, vorzugsweise, dass die Bedienvorrichtung (24) auf eine Position der Bedienvorrichtung (24) bezogene Geolokationsdaten erzeugen kann, insbesondere, dass die Bedienvorrichtung (24) die Personengeolokationsdaten erzeugt und an die Zentralsteuervorrichtung (1) überträgt, weiter insbesondere, dass die Bedienvorrichtung (24) dem zugeordneten Benutzer (8) zugeordnet ist.

9. Verfahren nach Anspruch 7 oder 8, **dadurch gekennzeichnet, dass** das Externsignal von einem Sensor, vorzugsweise einem Gerätenahbereichssensor, der Bedienvorrichtung (24) erzeugte Sensordaten umfasst.

10. Verfahren nach einem der Ansprüche 7 bis 9, **dadurch gekennzeichnet, dass** die Bedienvorrichtung (24) auf die Eingabe einer Aussetzanweisung ein Aussetzsignal als Bediensignal erzeugt, worauf die Zentralsteuervorrichtung (1) die Ausführung der Ansteuerungsfolge für eine vorgegebene und/oder benutzereingehbare Aussetzdauer aussetzt.

11. Verfahren nach einem der Ansprüche 7 bis 10, **dadurch gekennzeichnet, dass** die Bedienvorrichtung (24) auf die Eingabe einer Auswahlanweisung mit einer Auswahl einzelner Ansteuerungsschritte der Ansteuerungsfolge ein Auswahlsignal als Bediensignal erzeugt, worauf die Zentralsteuervorrichtung (1) die Ansteuerungsfolge gemäß der Auswahl ausführt.

12. Verfahren nach einem der Ansprüche 7 bis 11, **dadurch gekennzeichnet, dass** die Bedienvorrichtung (24) auf die Eingabe einer Ortsanweisung mit einer Ortsdefinition ein Ortssignal als Bediensignal erzeugt, worauf die Zentralsteuervorrichtung (1) die Ausführung der Ansteuerungsfolge basierend auf einer Position gemäß der Personengeolokationsdaten zur Ortsdefinition aussetzt, vorzugsweise, aussetzt, solange eine Position gemäß der Personengeolokationsdaten innerhalb der Ortsdefinition ist.

13. Verfahren nach einem der Ansprüche 7 bis 12, **dadurch gekennzeichnet, dass** die Zentralsteuervorrichtung (1) eine auf die bestimmte Ansteuerungsfolge bezogene Benachrichtigung an die Bedienvorrichtung (24) überträgt, dass die Bedienvorrichtung (24) die Benachrichtigung über eine Bedienausgabe signalisiert und dass die Bedienvorrichtung (24) ein Bediensignal basierend auf einer Eingabe auf die Benachrichtigung erzeugt.

14. Verfahren nach Anspruch 13, **dadurch gekennzeichnet, dass** die Eingabe eine Abbruchanweisung ist, dass das Bediensignal ein Abbruchsignal ist und dass die Zentralsteuervorrichtung (1) auf das Abbruchsignal eine Ausführung der Ansteuerungsfolge abbricht und/oder unterdrückt.

## Claims

1. Method for operating a home automation system having a central control device (1) and peripheral devices (2), wherein the peripheral devices (2) comprise a roller blind motor, wherein the peripheral devices (2) can be connected by telecommunication technology to the central control device (1) and can be actuated by the central control device (1), wherein in a switched-on operating state the central control device (1) is configured to actuate the peripheral devices (2) according to an actuation sequence which can be executed and, if appropriate, according to direct operator control inputs, and wherein the central control device (1) receives passenger location data and determines execution of the actuation sequence on the basis thereof,
wherein the central control device (1) adapts, while retaining the switched-on operating state, the execution of the actuation sequence on the basis of a received external signal which is, if appropriate, different from the direct operator control inputs, wherein the external signal comprises close-range data which are generated by a close-range sensor (19a, b), wherein the close-range sensor (19a, b) is a person sensor, and wherein the external signal comprises environmental data generated by an environment sensor (21) which is configured as a weather sensor.

2. Method according to Claim 1, **characterized in that** the environmental sensor is arranged on a residual building (11) which is assigned to the home automation system, or on a vehicle (22).

3. Method according to Claim 1 or 2, **characterized in that** the external signal comprises additional geolocation data which deviates at least temporarily from the person geolocation data, preferably **in that** the additional geolocation data comprises vehicle geolocation data and/or person-related geolocation data.

4. Method according to one of Claims 1 to 3, **characterized in that** the person geolocation data comprises geolocation data of a user (8) which is assigned to the home automation system.

5. Method according to one of Claims 1 to 4, **characterized in that** the external signal comprises close range location data of a person, preferably of the assigned user (8), which data specifies a position of the person, preferably with respect to the residential building (11), with an accuracy which is greater than that of the person geolocation data.

6. Method according to one of Claims 1 to 5, **characterized in that** the external signal comprises preferably instantaneous motion data, in particular a motion speed and/or a motion direction, of a person, in particular of the assigned user.

7. Method according to one of Claims 1 to 6, **characterized in that** the external signal comprises an operator control signal generated by an operator control device (24) in response to an operator control action, preferably **in that** the operator control device (24) is bound to a building (8).

8. Method according to Claim 7, **characterized in that** the operator control device (24) is mobile radio enabled, preferably **in that** the operator control device (24) can generate geolocation data relating to a position of the operator control (24), in particular **in that** the operator control device (24) generates the person geolocation data and transmits it to the central control device (1), more particularly **in that** the operator control device (24) is assigned to the assigned user (8).

9. Method according to Claim 7 or 8, **characterized in that** the external signal comprises sensor data generated by a sensor, preferably a device close-range sensor, or the operator control device (24) .

10. Method according to one of Claims 7 to 9, **characterized in that** the operator control device (24) generates an interruption signal as an operator control signal in response to the inputting of an interruption instruction, in response to which the central control device (1) interrupts the execution of the actuation sequence for an interruption period which is prespecified and/or can be input by the user.

11. Method according to one of Claims 7 to 10, **characterized in that** the operator control device (24) generates a selection signal as an operator control signal in response to the inputting of a selection instruction with a selection of individual actuation steps of the actuation sequence, in response to which the central control device (1) executes the actuation sequence according to the selection.

12. Method according to one of Claims 7 to 11, **characterized in that** the operator control device (24) generates a location signal as an operator control signal in response to the inputting of a location instruction with a location definition, in response to which the central control device (1) interrupts the execution of the actuation sequence on the basis of a position according to the position geolocation data for the location definition, preferably interrupts it for as long as a position according to the position geolocation data is within the location definition.

13. Method according to one of Claims 7 to 12, **characterized in that** the central control device (1) transmits a message, relating to the specific actuation sequence, to the operator control device (24), **in that** the operator control device (24) signals the message via an operator control output, and **in that** the operator control device (24) generates an operator control signal on the basis of an input in response to the message.

14. Method according to Claim 13, **characterized in that** the input is an abort instruction, **in that** the operator control signal is an abort signal, and **in that** in response to the abort signal the central control (1) aborts and/or suppresses execution of the actuation sequence.

## Revendications

1. Procédé pour faire fonctionner un système d'automatisation résidentiel comprenant un dispositif de commande central (1) et des dispositifs périphériques (2), les dispositifs périphériques (2) comprenant un moteur de volet roulant, les dispositifs périphériques (2) pouvant être reliés informatiquement au dispositif de commande central (1) et pouvant être pilotés par le dispositif de commande central (1), le dispositif de commande central (1) étant conçu pour, dans un état opérationnel en marche, piloter les dispositifs périphériques (2) conformément à une séquence de pilotage exécutable et éventuellement les piloter conformément à des saisies de conduite directes et le dispositif de commande central (1) recevant des données de géolocalisation de personnes et définissant une exécution de la séquence de pilotage en se basant sur celles-ci,
le dispositif de commande central (1), en conservant l'état opérationnel en marche, adaptant l'exécution de la séquence de pilotage en se basant sur un signal externe reçu, lequel est éventuellement différent des saisies de conduite directes, le signal externe comprenant des données de zone de proximité générées par un détecteur de zone de proximité (19a, b), le détecteur de zone de proximité (19a, b) étant un détecteur de personnes et le signal externe comprenant des données d'environnement générées par un capteur d'environnement (21) réalisé sous la forme d'un capteur météorologique.

2. Procédé selon la revendication 1, **caractérisé en ce que** le capteur d'environnement est disposé sur un bâtiment résidentiel (11) associé au système d'automatisation résidentiel ou sur un véhicule (22).

3. Procédé selon la revendication 1 ou 2, **caractérisé en ce que** le signal externe comprend des données de géolocalisation supplémentaires qui divergent au moins temporairement des données de géolocalisation de personnes, de préférence **en ce que** les données de géolocalisation supplémentaires comprennent des données de géolocalisation de véhicule et/ou des données de géolocalisation en rapport avec une personne.

4. Procédé selon l'une des revendications 1 à 3, **caractérisé en ce que** les données de géolocalisation de personnes comprennent des données de géolocalisation d'un utilisateur (8) associé au système d'automatisation résidentiel.

5. Procédé selon l'une des revendications 1 à 4, **caractérisé en ce que** le signal externe comprend des données de localisation de zone de proximité d'une personne, de préférence de l'utilisateur (8) associé, lesquelles indiquent une position de la personne, de préférence en référence au bâtiment résidentiel (11), avec une précision qui est supérieure à celle des données de géolocalisation de personnes.

6. Procédé selon l'une des revendications 1 à 5, **caractérisé en ce que** le signal externe comprend des données de mouvement, de préférence momentanées, notamment une vitesse de déplacement et/ou une direction de déplacement d'une personne, notamment de l'utilisateur associé.

7. Procédé selon l'une des revendications 1 à 6, **caractérisé en ce que** le signal externe comprend un signal de conduite généré par un dispositif de conduite (24) sur une manipulation de conduite, de préférence **en ce que** le dispositif de conduite (24) est lié au bâtiment.

8. Procédé selon la revendication 7, **caractérisé en ce que** le dispositif de conduite (24) est apte à la radiocommunication mobile, de préférence **en ce que** le dispositif de conduite (24) peut générer des données de géolocalisation se référant à une position du dispositif de conduite (24), notamment **en ce que** le dispositif de conduite (24) génère les données de géolocalisation de personnes et les transmet au dispositif de commande central (1), encore plus particulièrement **en ce que** le dispositif de conduite (24) est associé à l'utilisateur (8) associé.

9. Procédé selon la revendication 7 ou 8, **caractérisé en ce que** le signal externe comprend des données de détecteur générées par un détecteur, de préférence un détecteur de zone de proximité d'appareil, du dispositif de conduite (24).

10. Procédé selon l'une des revendications 7 à 9, **caractérisé en ce que** le dispositif de conduite (24), à la saisie d'une instruction de suspension, génère en tant que signal de conduite un signal de suspension, sur quoi le dispositif de commande central (1) suspend l'exécution de la séquence de pilotage pendant une durée de suspension prédéfinie et/ou pouvant être saisie par l'utilisateur.

11. Procédé selon l'une des revendications 7 à 10, **caractérisé en ce que** le dispositif de conduite (24), à la saisie d'une instruction de sélection avec une sélection d'étapes de pilotage individuelles de la séquence de pilotage, génère en tant que signal de conduite un signal de sélection, sur quoi le dispositif de commande central (1) exécute la séquence de pilotage conformément à la sélection.

12. Procédé selon l'une des revendications 7 à 11, **caractérisé en ce que** le dispositif de conduite (24), à la saisie d'une instruction d'emplacement comprenant une définition d'emplacement, génère en tant que signal de conduite un signal d'emplacement, sur quoi le dispositif de commande central (1) interrompt l'exécution de la séquence de pilotage en se basant sur une position selon les données de géolocalisation de personnes en vue de la définition de l'emplacement, de préférence l'interrompt tant qu'une position selon les données de géolocalisation de personnes se trouve à l'intérieur de la définition de l'emplacement.

13. Procédé selon l'une des revendications 7 à 12, **caractérisé en ce que** le dispositif de commande central (1) transmet au dispositif de conduite (24) une notification relative à la séquence de pilotage définie, **en ce que** le dispositif de conduite (24) signale la notification par le biais d'une sortie de conduite et **en ce que** le dispositif de conduite (24) génère un signal de conduite en se basant sur une saisie en présence de la notification.

14. Procédé selon la revendication 13, **caractérisé en ce que** la saisie est une instruction d'interruption, **en ce que** le signal de conduite est un signal d'interruption et **en ce que** le dispositif de commande central (1) interrompt et/ou inhibe une exécution de la séquence de pilotage en présence du signal d'interruption.
